# EUROPEAN PATENT SPECIFICATION

(11) **EP 1 247 318 B1**
(45) Date of publication and mention of the grant of the patent: **06.10.2004**
(21) Application number: 00987331.6
(22) Date of filing: 28.11.2000
(51) Int. Cl.: H02H 3/04

(54) **AN IMPROVED ELECTRONIC EARTH LEAKAGE CURRENT DEVICE**
VERBESSERTE ELEKTRONISCHE FEHLERSTROMSCHUTZVORRICHTUNG
DISPOSITIF ELECTRONIQUE POUR COURANT MIS A LA TERRE AMELIORE

(30) Priority: 30.12.1999 IT MI992756
(43) Date of publication of application: 09.10.2002
(73) Proprietor: ABB Service S.r.l., 20135 Milano (IT)
(72) Inventor: PATRUNO, Walter, I-20090 Buccinasco (IT); BRANDONISIO, Salvatore, I-20134 Milano (IT); ANTONELLO, Paolo, I-20010 Arluno (IT); BENISTON, John, Samuel, 69207 Sandhausen (DE); SCHWARZ, Willy, CH-8476 Unterstammheim (CH)
(74) Representative: Giavarini, Francesco
(86) International application number: PCT/EP2000/012076
(87) International publication number: WO 2001/050565

(56) References cited:
- EP-A- 0 045 286
- EP-A- 0 905 847
- GB-A- 2 072 441

## Description

The present invention relates to an electronic earth leakage current device, for a low-voltage power having improved functionality.

In particular, the present invention relates to an electronic earth leakage current device for single- or three-phase low-voltage power lines (therefore for voltage values below 1 KV).

Many examples of electronic earth leakage current devices for a low-voltage power line are known.

The main function of a electronic earth leakage current devices is to interrupt the power line if an earth leakage current above a certain preset threshold is detected. The power line, on which tripping occurs can be the power supply line (single- or three-phase) related to a specific load or to a local electrical user, for example of the industrial or domestic type.

The expression "earth leakage current" is to be understood as describing, for example, an earth fault current generated by any malfunction of the power line or of the electric loads to which the power line is connected.

For this reason, known electronic earth leakage current devices generally comprise the following functional elements:
- a current sensor for detecting an earth leakage current (also known as imbalance current or residual fault current) in a phase conductor of the power line;
- an electronic circuit for processing a signal, which is indicative of the value of the earth leakage current, sent by the current sensor, in order to generate a trip command.

Tripping events, which cause the interruption of the power line by the electronic earth leakage current device, occur according to universally acknowledged technical standards, which set the technical requirements to be met in order to consider the electronic device safe for the user of the power line.

In common practice, a tripping characteristic is determined for each electronic earth leakage current device. This tripping characteristic depends on the constructive characteristics of the device and ultimately on the characteristics of the electronic circuit.

Conventional electronic earth leakage current devices entail drawbacks.

By their very nature, earth leakage current devices (including electronic ones) trip if the detected earth leakage current exceeds a preset threshold, so as to ensure user safety.

In general, however, known earth leakage current devices provide no information regarding the presence and the intensity of the earth leakage current before the tripping that causes the interruption of the power line; some examples of earth leakage protection devices providing information regarding the presence of an earth leakage current are disclosed in patents US 4,441,999, EP0905847 and GB 2072441.

This fact entails that the user cannot predict the fault and cannot intervene preventatively, avoiding sudden interruptions of the power line. This can be particularly awkward in the industrial field, where the interruption of the power line forces unexpected machine downtimes.

Frequent maintenance is furthermore required in order to prevent the onset of faults entailing the interruption of the power line.

Furthermore, known electronic earth leakage current devices generally comprise electronic circuits for setting the minimum trip current and/or the maximum time interval for tripping. These circuits are generally constituted by electronic networks of the RC type, which process the electric signal, which is indicative of the value of the earth leakage current, that arrives from the current sensor. For example, the maximum time interval is commonly set by introducing a time delay, which is proportional to the detected earth leakage current value. Although the technical solutions that are commonly adopted allow to preset some important parameters that characterize the tripping criteria of the electronic earth leakage current device, they do not allow to define in advance its overall behavior and therefore the trend of its tripping characteristic.

This fact entails a high degree of uncertainty as to the behavior of the device for high earth leakage current values, for which the proportional delay introduced by commonly adopted technical solutions tends to drop to negligible values.

In this case, assured control over the tripping times of the electronic earth leakage current device is no longer provided. This can entail, for example, unexpected interruptions (known as untimely trips) of the power line which are a severe annoyance for the user. Furthermore, considerable problems can occur if an electric system includes electronic earth leakage current devices in a cascade configuration (for example a device of a general type, connected to a network with selective-type devices). In this case, the uncertainty regarding the tripping time causes problems in the coordinate management of the tripping events of the electronic earth leakage current devices. In addition to this drawback there is the fact that since the tripping characteristic is difficult to predetermine, many electronic devices can fail to comply with the standards during testing and inspection. This fact entails, in addition to a high degree of uncertainty as to the compliance of the earth leakage current device to the applicable standards, many difficulties if it is necessary to meet particular requirements of the electrical user for which the device is intended. For example, it is difficult to determine in advance the type of earth leakage current device or whether it must have a more complex tripping characteristic. Calibration operations in order to achieve a tripping characteristic, which approximates as closely as possible the intended one are still complicated.

Another drawback arises from the fact that known electronic earth leakage current devices are generally designed to use very specific types of actuator. In practice, the electronic circuits that generate the tripping signal are capable of driving only a certain type of actuator. If one decides to change the type of actuator, then the entire electronic earth leakage current device must be redesigned in order to ensure satisfactory performance.

Another drawback arises from the fact that in known electronic earth leakage current devices the design of the electronic circuits for generating the signal very often only marginally takes into account the operating condition of the sensor devices suitable to detect the presence of an earth leakage current. In particular, technical solutions for monitoring, with diagnostics of the ON/OFF type, the operating condition of the sensor means are very often all that is provided. Since said sensor means have to interface with electronics designed for other specific purposes (the generation of a tripping signal if a certain level of earth leakage current is exceeded), they often find themselves operating in a non-optimum manner, negatively affecting the performance of the entire electronic earth leakage current device.

The aim of the present invention is to provide an electronic earth leakage current device for a low-voltage power line, which allows to provide the user with information regarding the presence and extent of an earth leakage current before the electronic earth leakage current device trips.

Within the scope of this aim, an object of the present invention is to provide an electronic earth leakage current device, which allows to preset in a simple manner the trend of its tripping characteristic.

Another object of the present invention is to provide an electronic earth leakage current device, which allows to use several actuation devices without substantial modifications to the electronic circuits suitable to generate the tripping signal for said actuation devices.

Another object of the present invention is to provide an electronic earth leakage current device, which allows to optimize the operation of the sensors suitable for detecting the earth leakage current.

Another object of the present invention is to provide an electronic earth leakage current device, which allows to interrupt the power line if the sensors suitable to detect an earth leakage current malfunction.

Another object of the present invention is to provide an electronic earth leakage current device, which is highly reliable, relatively easy to manufacture and at modest costs.

Thus, the present invention provides an electronic earth leakage current device for a low-voltage power line, comprising:
- a moving contact and a fixed contact which can be mutually coupled/uncoupled; and
- first sensor means for detecting an earth leakage current and for generating an electric signal which is indicative of the value of said earth leakage current; and
- first electronic means which are electrically connected to said first sensor means in order to generate, on the basis of said electric signal which is indicative of the value of said earth leakage current, an electric tripping signal; and
- actuation means, operatively connected to said moving contact, in order to perform, in response to command electric signals, the separation of said moving contact from said fixed contact; and
- second electronic means for controlling, depending on said electric signal which is indicative of the value of said earth leakage current, signalling means which are suitable to provide the user with information regarding the value of the detected earth leakage current, said second electronic means comprising a first circuit network for generating one or more logic control signals following the reception of an electric voltage signal;

The earth leakage current device, according to the present invention, is characterized in that it comprises:
- a first comparator element for generating a first enable signal (V₁) if said
- electric voltage signal exceeds a preset reference voltage (V_{RIF1});
- a first circuit block for generating an electric current signal I₁ following the reception of said first enable signal (V₁);
- a first capacitive element which is connected to earth and is charged by an electric current signal in input, so as to generate a charging voltage;
- a second comparator element which is electrically connected to said first. capacitive element, receives in input said charging voltage and generates said one or more logic control signals if said charging voltage exceeds a preset reference voltage, each logic control signal corresponding to a predefined earth leakage current level.

Further characteristics and advantages of the invention will become apparent from the detailed description of a preferred embodiment of the earth leakage current device, according to the present invention, illustrated only by way of non-limitative example in the accompanying drawings, wherein:
Figure 1 is a block diagram of an electronic earth leakage current device, according to the invention;
Figure 2 is a block diagram of a detail of the electronic earth leakage current device, according to the invention;
Figure 3 is a block diagram of another detail of the electronic earth leakage current device, according to the invention;
Figure 4 is a block diagram of another detail of the electronic earth leakage current device, according to the invention;
Figure 5 is a block diagram of another detail of the electronic earth leakage current device, according to the invention;
Figure 6 is a block diagram of another detail of the electronic earth leakage current device, according to the invention.

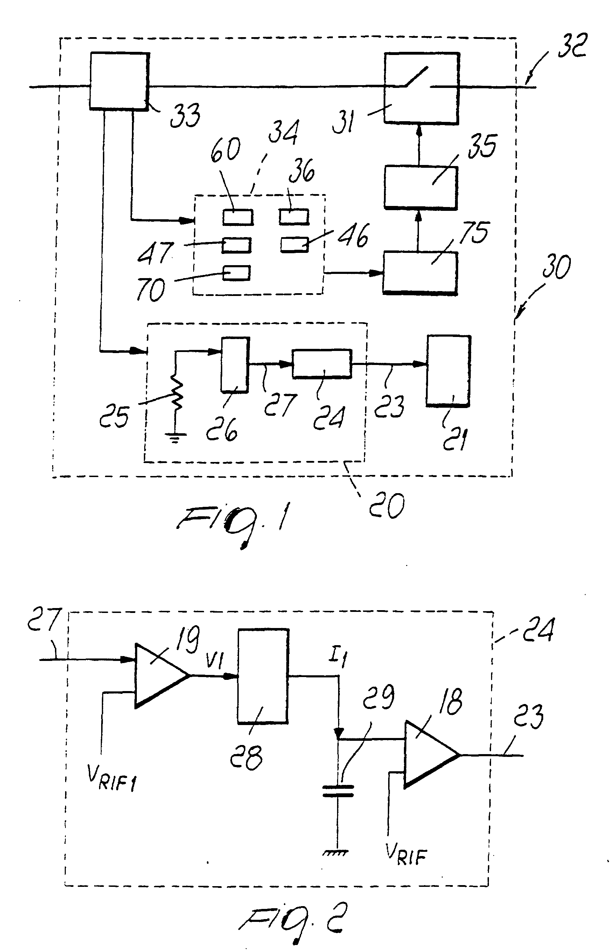

The structure of an electronic earth leakage current device according to the invention is illustrated schematically with reference to Figure 1.

The earth leakage current device according to the invention (delimited by the dashed line 30) comprises a moving contact and a fixed contact, which can be mutually coupled/uncoupled (reference 31). The separation of the moving contact from the corresponding fixed contact obviously produces the interruption of the power line 32.

The power line 32 can be of the single-phase or three-phase type, according to the requirements of the electrical user. The device 30 comprises first sensor means 33 for detecting an earth leakage current in a phase conductor of the power line 32. The sensor means 33 therefore generate an electric signal, which is indicative of the value of the detected earth leakage current.

According to a preferred embodiment, the first sensor means 33 comprise at least one current transformer provided with a primary winding which comprises the conductors of the power line 32. Accordingly, an electric current signal flows in the secondary winding of the transformer in response to the presence of an earth leakage current in the phase conductor that constitutes the primary winding. This electric current signal is therefore indicative of the value of the earth leakage current.

The device 30 comprises first electronic means 34, which are electrically connected to the first sensor means 33. The first electronic means 34 generate an electric tripping signal depending on the electric signal, indicative of the value of the earth leakage current (such as for example the one sent by the sensor means 33). The device 30 furthermore comprises actuation means 35, which are operatively connected to the moving contact of the pair of electric contacts 31. The actuation means 35 produce, in response to command electric signals 750, the separation of the moving contact from the corresponding fixed contact and therefore cause the interruption of the power line 32.

The actuation means 35 can be, for example, of the electromagnetic type (solenoid).

The device 30 comprises second electronic means 20, which receive an electric signal, indicative of the value of said earth leakage current from the first sensor means 33 and generate one or more control signals 23 for the signaling means 21. The signaling means 21 are suitable to provide the user with information regarding the value of the detected earth leakage current. Accordingly, they indicate the presence of an earth leakage current and also provide the user with indications regarding the extent of the detected earth leakage current.

This constructive solution allows to fully solving the drawbacks described in this regard. In practice, the user is warned of the presence of a possible fault before it causes the tripping of the electronic earth leakage current device. The user furthermore receives information related to the severity of the fault and therefore the likelihood that it will trip the device 30. The resulting advantages are considerable. The user can prevent the onset of severe electrical faults, scheduling maintenance interventions in the most convenient way. Furthermore, any maintenance interventions can be performed in a targeted manner, with considerable savings in terms of time and costs.

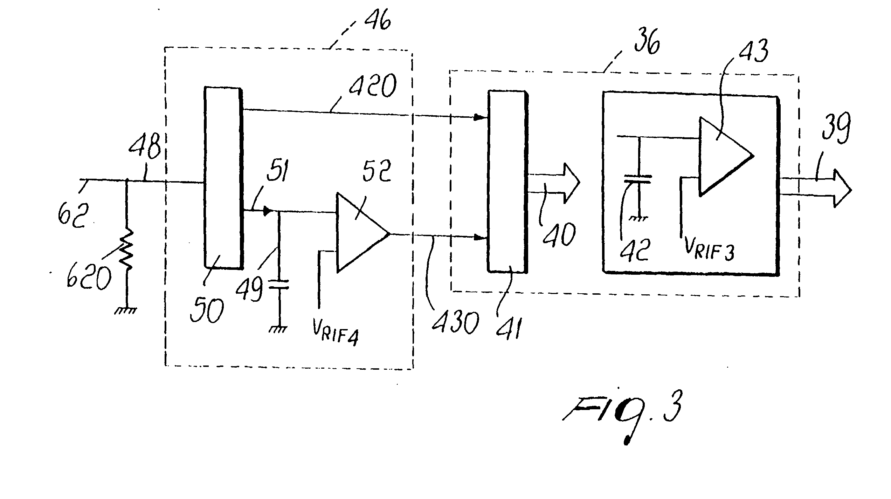

Preferably (Figure 1), the electronic means 20 comprise a first circuit network 24 for generating, following the reception of an electric voltage signal, one or more logic control signals (used as control signals 23). The electronic means 20 preferably comprise a resistive element 25 for generating, by virtue of the reception of an electric current signal, a first reference voltage which is proportional to the value of the detected earth leakage current. A second circuit block 26 is also comprised in order to generate, depending on said first reference voltage, an electric voltage signal 27. The signal 27 is sent in input to the first circuit network 24, so as to generate one or more logic control signals 23 to be sent to said signaling means 21. In a preferred embodiment (Figure 2), the first circuit network 24 comprises a first comparator element 19 for generating a first enable signal V₁ if said electric voltage signal exceeds a preset reference voltage V_{RIFI}. The network 24 furthermore comprises a first circuit block 28 for generating, following the reception of the enable signal V₁, an electric current signal I₁. The current signal I₁ is used to charge a first capacitive element 29, which is connected to earth, so as to generate, across it, a charging voltage. A second comparator element 18, electrically connected to said first capacitive element 29, receives in input said charging voltage and generates one or more logic control signals 23 if said charging voltage exceeds one or more preset reference voltages V_{RIF},

In practice, the comparator element 18 receives in input the charging voltage across the capacitive element 29 and compares it with various voltage levels V_{RIF}. As soon as a voltage level is exceeded, a logic control signal is generated: As an alternative, the charging voltage across the capacitive element 29 can be sent in input, in parallel, to a plurality of comparator elements similar to the element 18. Advantageously, the signaling means 21 comprise one or more signaling devices of the LED (Light Emission Device) type, activated by the logic control signals 23, for example by means of a simple combinatorial network. In practice, each logic control signal corresponds to a predefined detected earth leakage current level. When a control signal is generated, it activates an LED device, which signals that that given level of earth leakage current has been reached. For example, it is possible to use an array of LED devices in which the activation of each element corresponds to a percentage level of the maximum tolerable earth leakage current level.

In this way, the user can easily check the existence, the value and optionally the development over time of an earth leakage current that is present in the power line, before the earth leakage current device trips.

In a preferred embodiment (Figure 1), the first electronic means 34 comprise first circuit means 36 for generating an electric tripping signal 39 after a preset minimum time interval. It is also possible to comprise second circuit means 46 for defining a minimum value of the earth leakage current above which an electric tripping signal is to be generated, and/or third circuit means 47 for generating a tripping signal within a maximum time interval, calculated according to a substantial relation of inverse proportionality with respect to an earth leakage current higher than the minimum value.

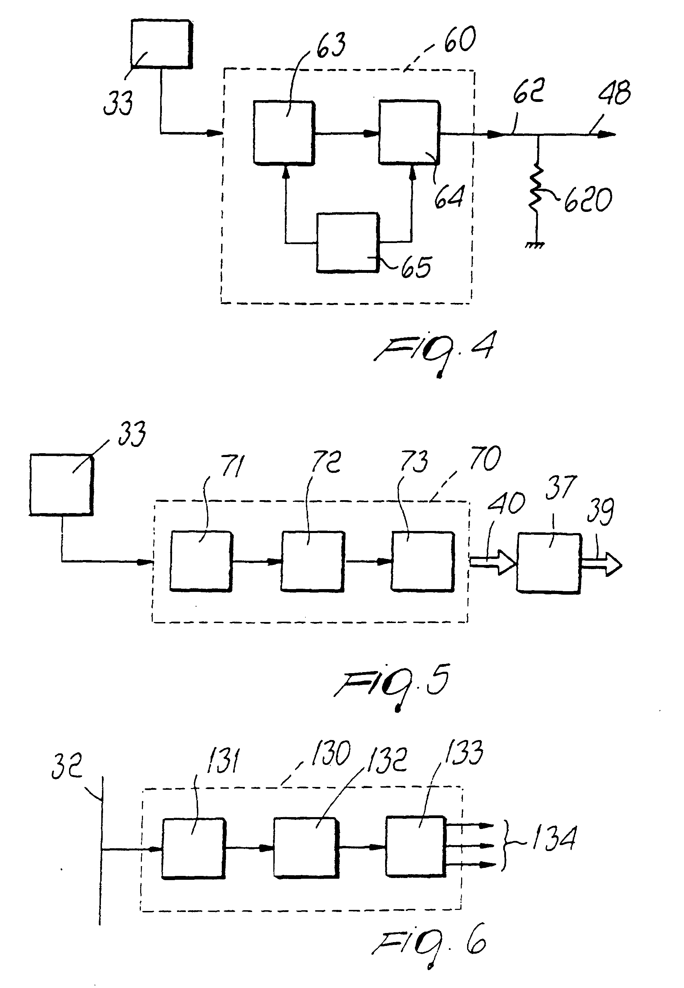

Advantageously (Figure 3), the first circuit means 36 comprise a second circuit network 37 for generating an electric tripping signal 39 following the reception in input of an electric current signal 40, and a first circuit block 41 for sending, following the reception of first and second enable signals (references 420 and 430), an electric current signal 40 in input to the circuit network 37. The circuit block 41 is also meant to perform, following the failed reception of the enable signals 420 and 430, a pre-discharge of said circuit network 37. This can occur by sending in input to the circuit network 37 an appropriate current signal 40. In a preferred embodiment, the circuit network 37 comprises a second capacitive element 42 connected to earth. The capacitive element 42 is charged/discharged by the electric current signal 40 sent by the first circuit block 41. The circuit network 37 can furthermore comprise a third comparator element 43 electrically connected to the capacitive element 42. The comparator element 43 receives in input the charging voltage across the capacitive element 42 and generated an electric tripping signal 39, if said charging voltage exceeds a preset reference voltage(V_{RIF3}).

Advantageously, the second circuit means 46 comprise a resistive calibration element 620 for generating (Figure 4), by virtue of the reception of an electric current signal 62, a first reference voltage 48 which is proportional to said minimum value of the earth leakage current. The third circuit means advantageously comprise a third capacitive element 49 connected to earth and a third circuit block 50. The third circuit block 50 is designed to send an electric current signal 51 to the capacitive element 49, depending on the second reference voltage 48, so as to generate a charging voltage across the capacitive element 49 if an earth leakage current higher than said minimum value is present. If an earth leakage current higher than said minimum value is not present, then the signal 51 is sent so as to discharge the capacitive element 49. Advantageously, the third circuit block 50 provides, depending on the second reference voltage 48, a first logic signal, which is used as enable signal 420.

The third circuit means 46 can furthermore comprise a fourth comparator element 52 which is coupled to the capacitive element 49. The comparator element 52 receives in input the charging voltage across the capacitive element 49 and generates a second logic signal, which is used as enable signal 430, if said charging voltage exceeds a preset reference voltage (V_{RIF4}).

Again with reference to Figure 3, the operation of the first, second and third circuit means comprised in the electronic earth leakage current device according to the invention is described in greater detail.

The calibration resistor 620 generates a reference voltage, depending on which the circuit block 50 charges the capacitive element 49. In particular, if the reference voltage indicates the presence of a value of the earth leakage current which is higher than the minimum value, the block 50 starts the charging process so that the charging time is inversely proportional to the detected earth leakage current. Once charging has been completed (enable signal 430), and if a sufficiently high earth leakage current is still present (enable signal 420), the block 41 charges the capacitive element 42. In order to ensure a constant charging time, charging occurs in a linear manner which is not proportional to the detected earth leakage current. In this manner, a minimum time interval after which the electric tripping signal 39 is generated is set. The described constructive solutions are particularly advantageous, since they allow to preset during design the entire tripping characteristic of the electronic earth leakage current device.

The maximum time interval for tripping is in fact defined by the sum of the charging times of the capacitive elements 49 and 42. On the other hand, for earth leakage current values that are relatively higher than the nominal value, the charging time of the capacitive element 49 becomes negligible, while the charging time of the capacitive element 42 remains constant. Accordingly, a minimum tripping time is set. Finally, the calibration resistor 620 allows to determine the minimum tripping current by generating the reference voltage 48.

The tripping characteristic of the electronic earth leakage current device can therefore be fully defined during design. Accordingly, it is possible to decide in advance the tripping characteristics of the electronic earth leakage current device, allowing to better meet the requirements of the electrical user.

It is also very important that pre-discharge of the capacitive elements 49 and 42 is performed if the conditions for generating an electric tripping signal do not occur, according to the described criteria.

This in fact allows to avoid unwanted trippings (untimely trippings) caused by accumulations of charge in the capacitive elements 49 and 42. The presence of accumulated charge would in fact reduce the charging times of the capacitive elements 42 and 49 and it would therefore no longer be possible to ensure a preset minimum time interval after which tripping is to occur.

In another advantageous embodiment, the first electronic means 34 comprise fourth circuit means 60 (Figure 4) for interfacing with the first sensor means 33.

The fourth circuit means 60 receive from the first sensor means 33 an electric signal 61 which is indicative of the value of the earth leakage current and generate an electric current signal 62 which is indicative of the absolute value of the earth leakage current. Advantageously, the circuit means 60 comprise a low-impedance circuit block 63, which is electrically connected to the first sensor means 33 so as to ensure their linear operation. A circuit block 64 is furthermore comprised and is electrically connected to the circuit block 63 in order to receive the electric signal which is indicative of the value of the earth leakage current and in order to generate an electric current signal 62 which is indicative of the absolute value of the detected earth leakage current.

The electric current signal 62 is sent in input to the calibration resistor 620, so as to generate the reference voltage 48.

Advantageously, a filtering circuit block 65 is comprised, which is provided with means for eliminating high-intensity noise (protection diodes) and/or highfrequency noise (an RC network). This embodiment is particularly advantageous, since it allows to optimize the performance of the sensor means 33 especially if, as commonly occurs in practice, they comprise a current transformer. In this case, the secondary winding of the current transformer can operate in substantially ideal conditions (i.e. close to the short-circuit condition).

In another preferred embodiment, the first electronic means 34 comprise fifth circuit means 70 for generating an electric tripping signal if said first sensor means 33 malfunction. With reference to Figure 5, the circuit means 70 advantageously comprise a sixth circuit block 71 for measuring predefined physical parameters which are indicative of the operating condition of the first sensor means. For example, if the sensor means comprise a current transformer, it is possible to measure the equivalent resistance of the secondary winding of the transformer. If the values of the physical parameters are not within a preset range, the circuit block 71 generates a third enable signal 72 for a seventh circuit block 73, which is electrically connected to the first circuit network 37.

The circuit block 73 generates, following the reception of the enable signal 72, an electric current signal 40 to be sent in input to the first circuit network 37, so as to generate an electric tripping signal 39.

This constructive embodiment is particularly advantageous, since it allows avoiding the possibility of failure of the electronic earth leakage current device to operate, for example due to possible damage suffered during the assembly of the sensor means 33.

Again with reference to Figure 1, the actuation means are advantageously connected to sixth circuit means 75 which are suitable to receive an electric tripping signal 39 and to generate one or more command electric signals 750 for activating said actuation means. The sixth circuit means 75 comprise, for example, a circuit block (not shown), provided with an output stage of the latch type, which has two stable operating states.

The sixth circuit means 75 advantageously comprise one or more electronic circuits (for example an appropriately configured transistor stage) which ensure a relatively high output current.

In this manner, it is possible to drive actuation means of a different type, without substantially modifying the first electronic means 36.

Advantageously, the electronic earth leakage current device according to the invention comprises third electronic means which are electrically connected to the power line 32 in order to provide a supply voltage to the first and/or second electronic means 34 and 91.

With reference to Figure 6, the third electronic means 130 can comprise a rectifier stage 131 (for example a diode bridge) which is connected to a filtering stage 132 (for example an RC network) which is in turn connected to a regulator stage 133, suitable to provide the various voltage levels (reference 134) used to supply the various components or for the voltage references (such as for example the reference voltages V_{RIF}, V_{RIFI} , et cetera).

In practice it has been found that the earth leakage current device, according to the invention, fully achieves the intended aim and objects.

Furthermore, it has been ascertained that the electronic earth leakage current device, according to the invention, is easy to manufacture at low cost. In particular, the first and/or second and/or third electronic means can be integrated in a microelectronic semiconductor circuit, particularly in a circuit of the ASIC (Application-Specific Integrated Circuit) type or in a microcontroller.

This allows to considerably reducing room occupation while reducing manufacturing costs and improving operating reliability.

## Claims

1. An electronic earth leakage protection device (30) for a low-voltage power line (32), comprising:
- a moving contact (31) and a fixed contact (31) which can be mutually coupled/uncoupled; and
- first sensor means (33) for detecting an earth leakage current and for generating an electric signal which is indicative of the value of said earth leakage current; and
- first electronic means (34) which are electrically connected to said first sensor means (33) in order to generate, on the basis of an electric signal which is indicative of the value of said earth leakage current, an electric tripping signal; and
- actuation means (35), operatively connected to said moving contact (31), in order to perform, in response to command electric signals, the separation of said moving contact (31) from said fixed contact (31);
- second electronic means (20) for controlling, depending on said electric signal which is indicative of the value of said earth leakage current, signalling means (21) which are suitable to provide the user with information regarding the value of the detected earth leakage current, said second electronic means (20) comprising a first circuit network (24) for generating one or more logic control signals (23) following the reception of an electric voltage signal;
- **characterized in that** said first circuit network (24) comprises:
- a first comparator element (19) for generating a first enable signal (V1) if said electric voltage signal (27) exceeds a preset reference voltage (VRIF1);
- a first circuit block (28) for generating an electric current signal 11 following the reception of said first enable signal (V1);
- a first capacitive element (29) which is connected to earth and is charged by an electric current signal in input, so as to generate a charging voltage; a second comparator element (18) which is electrically connected to said first capacitive element (29), receives in input said charging voltage and generates said one or more logic control signals (23) if said charging voltage exceeds a preset reference voltage, each logic control signal (23) corresponding to a predefined earth leakage current level.

2. An electronic earth leakage protection device (30) according to claim 1 **characterized in that** said second electronic means (20) comprise:
- a resistive element (24) for generating, by virtue of the reception of an electric current signal, a first reference voltage which is proportional to the value of said earth leakage current;
- a second circuit block (26) for generating, depending on said first reference voltage, an electric voltage signal (27) to be sent in input to said first circuit network (24), so as to generate one or more logic control signals (23) to be sent to said signalling means (21).

3. An electronic earth leakage protection device (30) according to claim 1 or 2, **characterized in that** said first electronic means (34) suitable to generate said electric tripping signal comprise:
- first circuit means (36) for generating an electric tripping signal (39) after a preset minimum time interval; and/or
- second circuit means (46) for defining a minimum value of said earth leakage current, an electric tripping signal being generated for earth leakage current values higher than said minimum value; and/or
- third circuit means (47) for generating a tripping signal within a maximum time interval, calculated according to a substantial relation of inverse proportionality with respect to a generic current value higher than said minimum value.

4. An electronic earth leakage protection device (30) according to one or more of the previous claims, **characterized in that** said first electronic means (34) comprise a second circuit network (37) for generating, following the reception in input of an electric current signal (40), said electric tripping signal (39).

5. An electronic earth leakage protection device (30) according to claim 4, **characterized in that** said second circuit network (37) comprises:
- a second capacitive element (42) which is connected to earth and is charged by an electric current signal (40) in input, so as to generate a charging voltage;
- a third comparator element (43) which is electrically connected to said second capacitive element (42), receives in input said charging voltage and generates said electric tripping signal (39) if said charging voltage exceeds a preset reference voltage.

6. An electronic earth leakage protection device (30) according to claims 3 to 5, **characterized in that** said second circuit means (46) comprise a resistive calibration element (620) for generating, by virtue of the reception of said electric current signal (62), a second reference voltage which is proportional to said minimum value of the earth leakage current.

7. An electronic device earth leakage protection device (30) according to claims 3 to 6, **characterized in that** said third circuit means (47) comprise:
- a third capacitive element (49) which is connected to earth; and
- a third circuit block (50) for:
- sending an electric current signal (51) to said third capacitive element (49), depending on said first reference voltage, so as to generate a charging voltage across said third capacitive element (49) if an earth leakage current value higher than said minimum value is present, and discharge said third capacitive element (49) if an earth leakage current higher than said minimum value is not present; and
- providing a first logic signal (420) depending on said first reference voltage;
- a fourth comparator element (52) which is coupled to said third capacitive element (49), receives in input the charging voltage across said third capacitive element (49) and generates a second logic signal if said charging voltage exceeds a reference voltage.

8. An electronic earth leakage protection device (30) according to claims 3 to 7, **characterized in that** said first circuit means (36) comprise a fourth circuit block (60) for generating, following the reception of first and second enable signals, an electric current signal to be sent in input to said first circuit network (24), so as to generate said electric tripping signal.

9. An electronic earth leakage protection device (30) according to claims 3 to 8, **characterized in that** said first and second logic signals are used respectively as first and second enable signals for said fourth circuit block (60).

10. An electronic earth leakage protection device (30) according to one or more of the previous claims, **characterized in that** said first electronic means (34) comprise fourth circuit means (60) for interfacing with said first sensor means (33), said fourth circuit means (60) receiving from said first sensor means (33) said electric signal (61) which is indicative of the value of the earth leakage current and generating an electric current signal (62) which is indicative of the absolute value of said earth leakage current.

11. An electronic earth leakage protection device (30) according to one or more of the previous claims, **characterized in that** said first electronic means (34) comprise fifth circuit means (70) for generating an electric tripping signal if said first sensor means (33) malfunction.

12. An electronic earth leakage protection device (30) according to one or more of the previous claims, **characterized in that** said actuation means (35) are electrically connected to sixth circuit means (75) which are suitable to receive an electric tripping signal (39) from said first circuit means (36) and to generate one or more command electric signals (750) for activating said actuation means (35).

13. An electronic earth leakage protection device (30) according to one or more of the previous claims, **characterized in that** it comprises third electronic means (130), which are electrically connected to said low-voltage power line (32), in order to provide a supply voltage to said first and/or second electronic means (34, 20).

14. An electronic earth leakage protection device (30) according to one or more of the previous claims, **characterized in that** said first and/or second and/or third electronic means (34, 20, 130) are integrated in one or more microelectronic semiconductor circuits.

## Patentansprüche

1. Elektronisches Erdschlussschutzsystem (30) für eine Niederspannungsleitung (32), umfassend:
- einen beweglichen Kontakt (31) und einen festen Kontakt (31), welche wechselseitig gekoppelt/entkoppelt werden können; und
- erste Sensormittel (33) zum Erfassen eines Erdschlussstroms und zum Erzeugen eines elektrischen Signals, welches die Stärke des Erdschlussstroms anzeigt; und
- erste elektronische Mittel (34), welche elektrisch verbunden sind mit den ersten Sensormitteln (33), um auf der Basis eines elektrischen Signals, welches die Stärke des Erdschlussstroms anzeigt, ein elektrisches Auslöse-Signal zu erzeugen; und
- Aktuationsmittel (35), wirkend verbunden mit den beweglichen Kontakten (31), um in Antwort auf elektrische Steuersignale, die Trennung des beweglichen Kontakts (31) von dem festen Kontakt (31) auszuführen;
- zweite elektronische Mittel (20) zum Steuern, abhängig von dem elektrischen Signal, welches die Stärke des Erdschlussstroms anzeigt, von Signalisierungsmitteln (21), welche geeignet sind, einen Verbraucher mit Informationen hinsichtlich der Stärke des erfassten Erdschlussstroms zu versorgen, wobei die zweiten elektronischen Mittel (20) ein erstes Schaltkreisnetzwerk (24) zum Erzeugen eines oder mehrerer Logiksteuersignale (23) umfassen, folgend auf den Empfang eines elektrischen Spannungssignals;
- **dadurch gekennzeichnet, dass** das erste Schaltkreisnetzwerk (24) umfasst:
- ein erstes Komparatorelement (19) zum Erzeugen eines ersten Freigabesignals (V1), wenn das elektrische Spannungssignal (27) eine voreingestellte Referenzspannung (V_{RIFI}) überschreitet;
- einen ersten Schaltkreisblock (28) zum Erzeugen eines elektrischen Stromsignals (11) folgend auf das Empfangen eines ersten Freigabesignals (V1);
- ein erstes kapazitives Element (29), welches mit Masse verbunden ist und geladen wird durch ein elektrisches Stromsignal als Eingabe, um eine Ladespannung zu erzeugen;
- ein zweites Komparatorelement (18), welches elektrisch mit dem ersten kapazitiven Element (29) verbunden ist, empfängt als Eingabe die Ladespannung und erzeugt eines oder mehrere Logiksteuersignale (23), wenn die Ladespannung eine voreingestellte Referenzspannung überschreitet, wobei jedes Logiksteuersignal (23) einer vordefinierten Erdschlussstromstärke entspricht.

2. Elektronisches Erdschlussschutzgerät (30) gemäß Anspruch 1, **dadurch gekennzeichnet, dass** das zweite elektronische Mittel (20) umfasst:
- ein resistives Element (24) zum Erzeugen einer ersten Referenzspannung mittels des Empfangs eines elektrischen Stromsignals, welche proportional zu dem Wert des Erdschlussstroms ist;
- einen zweiten Schaltkreisblock (26) zum Erzeugen, abhängig von der ersten Referenzspannung, eines elektrischen Spannungssignals (27), welches als Eingabe an das erste Schaltkreisnetzwerk (24) geschickt werden soll, um eines oder mehrere Logiksteuersignale (23) zu erzeugen, welche zu den Signalisierungsmitteln (21) geschickt werden sollen.

3. Elektronisches Erdschlussschutzgerät (30) gemäß Anspruch 1 oder 2, **dadurch gekennzeichnet, dass** das erste elektronische Mittel (34), das geeignet ist, das elektrische Auslöse-Signal zu erzeugen, umfasst:
- erste Schaltkreismittel (36) zum Erzeugen eines elektrischen Auslöse-Signals (39) nach einem voreingestellten minimalen Zeitintervall; und/oder
- zweite Schaltkreismittel (46) zum Definieren eines minimalen Werts des Erdschlussstroms, wobei ein elektrisches Auslöse-Signal für Erdschlussstromwerte höher als der Minimalwert erzeugt wird; und/oder
- dritte Schaltkreismittel (47) zum Erzeugen eines Auslöse-Signals innerhalb eines maximalen Zeitinveralls, berechnet gemäß einer wesentlichen Relation von inverser Proportionalität im Hinblick auf einen allgemeinen Stromwert höher als der Minimalwert.

4. Elektronisches Erdschlussschutzgerät (30) gemäß einem oder mehrerer der vorhergehenden Ansprüche, **dadurch gekennzeichnet, dass** die ersten elektronischen Mittel (34) ein zweites Schaltkreisnetzwerk (37) umfassen, zum Erzeugen des elektrischen Auslöse-Signals (39), folgend auf den Empfang eines elektrischen Stromsignals (40) als Eingabe.

5. Elektronisches Erdschlussschutzgerät (30) gemäß Anspruch 4, **dadurch gekennzeichnet, dass** das zweite Schaltkreisnetzwerk (37) umfasst:
- ein zweites kapazitives Element (42), welches mit Masse verbunden ist und durch ein elektrisches Stromsignal (40) als Eingabe geladen wird, um eine Ladespannung zu erzeugen;
- ein drittes Komparatorelement (43), welches elektrisch verbunden ist mit dem zweiten kapazitiven Element (43), empfängt als Eingabe die Ladespannung und erzeugt das elektrische Auslöse-Signal (39), wenn die Ladespannung eine voreingestellte Referenzspannung beschreibt.

6. Elektronisches Erdschlussschutzgerät (30) gemäß Ansprüchen 3 bis 5, **dadurch gekennzeichnet, dass** das zweite Schaltkreismittel (46) ein resistives Kalibrierungselement (620) umfasst zum Erzeugen einer zweite Referenzspannung, mittels des Empfangs des elektrischen Stromsignals (62), welche proportional zu dem Minimalwert des Erdschlussstroms ist.

7. Elektronisches Erdschlussschutzgerät (30) gemäß Ansprüchen 3 bis 6, **dadurch gekennzeichnet, dass** das dritte Schaltkreismittel (47) umfasst:
- ein drittes kapazitives Element (49), welches mit Masse verbunden ist; und
- einen dritten Schaltkreisblock (50) zum:
- Senden eines elektrischen Stromsignals (51) an das dritte kapazitive Element (49), abhängig von der ersten Referenzspannung, um eine Ladespannung über das dritte kapazitive Element (49) zu erzeugen, wenn ein Erdschlussstromwert höher als der Minimalwert vorhanden ist und das dritte kapazitive Element (49) zu entladen, wenn ein Erdschlussstrom höher als der Minimalwert nicht vorhanden ist; und
- Bereitstellen eines ersten Logiksignals (420) abhängig von der ersten Referenzspannung;
- ein viertes Komparatorelement (42), welches an ein drittes kapazitives Element (49) gekoppelt ist, empfängt als Eingang die Ladespannung über dem dritte kapazitiven Element (49) und erzeugt ein zweites Logiksignal, wenn die Ladespannung eine Referenzspannung überschreitet.

8. Elektronisches Erdschlussschutzgerät (30) gemäß Ansprüchen 3 bis 7, **dadurch gekennzeichnet, dass** die ersten Schaltkreismittel (36) einen vierten Schaltkreisblock (60) umfassen, zum Erzeugen eines elektrischen Stromsignals, folgend auf den Empfang von ersten und zweiten Freigabesignalen , das als Eingabe an das erste Schaltkreisnetzwerk (24) geschickt werden soll, um ein elektrisches Auslöse-Signal zu erzeugen.

9. Elektronisches Erdschlussschutzgerät (30) gemäß Ansprüchen 3 bis 8, **dadurch gekennzeichnet, dass** das erste und zweite Logiksignal jeweils als erste und zweite Freigabesignale für den vierten Schaltkreisblock (60) benutzt werden.

10. Elektronisches Erdschlussschutzgerät (30) gemäß einem der vorhergehenden Ansprüche, **dadurch gekennzeichnet, dass** die ersten elektronischen Mittel (34) vierte Schaltkreismittel (60) umfassen, um eine Schnittstelle zu bilden mit dem ersten Sensormittel (33), wobei die vierten Schaltkreismittel (60) von den ersten Sensormitteln (33) das elektrische Signal (61) empfangen, welches den Wert des Erdschlussstroms anzeigt und ein elektrisches Stromsignal (62) erzeugen, welches den absoluten Wert des Erdschlussstroms anzeigt.

11. Elektronisches Erdschlussschutzgerät (30) gemäß einem oder mehreren der vorhergehenden Ansprüche, **dadurch gekennzeichnet, dass** die ersten elektronischen Mittel (34) fünfte Schaltkreismittel (70) zum Erzeugen eines elektrischen Auslöse-Signals umfassen, wenn die ersten Sensormittel (33) nicht funktionieren.

12. Elektronisches Erdschlussschutzgerät (30) gemäß einem oder mehreren der vorhergehenden Ansprüche, **dadurch gekennzeichnet, dass** die Aktuationsmittel (35) elektrisch mit den sechsten Schaltkreismitteln (75) verbunden sind, welche geeignet sind, ein elektrisches Auslöse-Signal (39) von den ersten Schaltkreismitteln (36) zu empfangen und eines oder mehrere elektrische Steuersignale (750) zum Aktivieren der Aktuationsmittel (35) zu erzeugen.

13. Elektronisches Erdschlussschutzgerät (30) gemäß einem oder mehreren der vorhergehenden Ansprüche, **dadurch gekennzeichnet, dass** es dritte elektronische Mittel (130) umfasst, welche elektrisch mit der Niederspannungsstromleitung (32) verbunden sind, um einen Versorgungsstrom an den ersten und/oder zweiten elektronischen Mitteln (34, 20) bereitzustellen.

14. Elektronisches Erdschlussschutzgerät (30) gemäß einem oder mehreren der vorhergehenden Ansprüche, **dadurch gekennzeichnet, dass** die ersten und/oder zweiten und/oder dritten elektronischen Mittel (34, 20, 130) in einem oder mehreren mikroelektronischen Halbleiterschaltkreisen integriert sind.

## Revendications

1. Dispositif électronique de protection contre un courant de fuite mis à la terre (30) destiné à une ligne électrique à basse tension (32), comprenant :
- un contact mobile (31) et un contact fixe (31) qui peuvent être mutuellement couplés / non couplés ; et
- des premiers moyens (33) formant détecteur pour détecter un courant de fuite mis à la terre et pour produire un signal électrique qui est indicatif de la valeur dudit courant de fuite mis à la terre ; et
- des premiers moyens électroniques (34) qui sont connectés électriquement auxdits premiers moyens formant détecteur (33) afin de produire, sur la base d'un signal électrique qui est indicatif de la valeur dudit courant de fuite mis à la terre, un signal de déclenchement électrique ; et
- des moyens d'actionnement (35), connectés en fonctionnement audit contact mobile (31), afin d'effectuer, en réponse à des signaux de commande électriques, la séparation dudit contact mobile (31) dudit contact fixe (31) ;
- des deuxièmes moyens électroniques (20) pour commander, selon ledit signal électrique qui est indicatif de la valeur dudit courant de fuite mis à la terre, des moyens de signalisation (21) qui sont adaptés pour fournir à l'utilisateur des informations concernant la valeur du courant de fuite mis à la terre détecté, lesdits deuxièmes moyens électroniques (20) comprenant un premier réseau de circuit (24) pour produire un ou plusieurs signaux de commande logiques (23) après la réception d'un signal de tension électrique.
- **caractérisé en ce que** ledit premier réseau de circuit (24) comprend :
- un premier élément formant comparateur (19) pour produire un premier signal de validation (V₁) si ledit signal de tension électrique (27) dépasse une tension de référence préréglée (V_{RIF1});
- un premier bloc de circuit (28) pour produire un signal de courant électrique I₁ après la réception dudit premier signal de validation (V₁) ;
- un premier élément capacitif (29) qui est connecté à la terre et qui est chargé par un signal de courant électrique à l'entrée, afin de produire une tension de charge ;
- un deuxième élément formant comparateur (18) qui est connecté électriquement audit premier élément capacitif (29), reçoit en entrée ladite tension de charge et produit lesdits un ou plusieurs signaux de commande logiques (23) si ladite tension de charge dépasse une tension de référence préréglée, chaque signal de commande logique (23) correspondant à un niveau de courant de fuite mis à la terre prédéfini.

2. Dispositif électronique de protection contre un courant de fuite mis à la terre (30) selon la revendication 1, **caractérisé en ce que** lesdits deuxièmes moyens électroniques (20) comprennent :
- un élément résistif (24) pour produire, suite à la réception d'un signal de courant électrique, une première tension de référence qui est proportionnelle à la valeur dudit courant de fuite mis à la terre ;
- un deuxième bloc de circuit (26) pour produire, selon ladite première tension de référence, un signal de tension électrique (27) à envoyer à l'entrée dudit premier réseau de circuit (24), afin de produire un ou plusieurs signaux de commande logiques (23) à envoyer auxdits moyens de signalisation (21).

3. Dispositif électronique de protection contre un courant de fuite mis à la terre (30) selon l'une quelconque des revendications 1 ou 2, **caractérisé en ce que** les premiers moyens électroniques (34) appropriés pour produire ledit signal de déclenchement électrique comprennent :
- des premiers moyens de circuit (36) pour produire un signal de déclenchement électrique (39) après un intervalle de temps minimum préréglé ; et / ou
- des deuxièmes moyens de circuit (46) pour définir une valeur minimum dudit courant de fuite mis à la terre, un signal de déclenchement électrique étant produit pour des valeurs de courant de fuite mis à la terre plus élevées que ladite valeur minimum ; et / ou
- des troisièmes moyens de circuit (47) pour produire un signal de déclenchement dans un intervalle de temps maximum, calculé selon une relation sensible de proportionnalité inverse par rapport à une valeur de courant générique plus élevée que ladite valeur minimum.

4. Dispositif électronique de protection contre un courant de fuite mis à la terre (30) selon l'une quelconque des revendications précédentes, **caractérisé en ce que** les premiers moyens électroniques (34) comprennent un deuxième réseau de circuit (37) pour produire, après la réception en entrée d'un signal de courant électrique (40), ledit signal de déclenchement électrique (39).

5. Dispositif électronique de protection contre un courant de fuite mis à la terre (30) selon la revendication 4, **caractérisé en ce que** ledit deuxième réseau de circuit (37) comprend :
- un deuxième élément capacitif (42) qui est connecté à la terre et qui est chargé par un signal de courant électrique (40) à l'entrée, afin de produire une tension de charge ;
- un troisième élément comparateur (43) qui est connecté électriquement audit deuxième élément capacitif (42), reçoit en entrée ladite tension de charge et produit ledit signal de déclenchement électrique (39) si ladite tension de charge dépasse une tension de référence préréglée.

6. Dispositif électronique de protection contre un courant de fuite mis à la terre (30) selon l'une quelconque des revendications 3 à 5, **caractérisé en ce que** lesdits deuxièmes moyens de circuit (46) comprennent un élément résistif de calibrage (620) pour produire, suite à la réception dudit signal de courant électrique (62), une deuxième tension de référence qui est proportionnelle à ladite valeur minimum du courant de fuite mis à la terre.

7. Dispositif électronique de protection contre un courant de fuite mis à la terre (30) selon l'une quelconque des revendications 3 à 6, **caractérisé en ce que** lesdits troisièmes moyens de circuit (47) comprennent :
- un troisième élément capacitif (49) qui est connecté à la terre ; et
- un troisième bloc de circuit (50) pour :
- l'envoi d'un signal de courant électrique (51) audit troisième élément capacitif (49), selon ladite première tension de référence, afin de produire une tension de charge aux bornes dudit troisième élément capacitif (49) si une valeur de courant de fuite mis à la terre plus élevée que ladite valeur minimum est présente, et de décharger ledit troisième élément capacitif (49) si un courant de fuite mis à la terre plus élevé que ladite valeur minimum n'est pas présent ; et
- la fourniture d'un premier signal logique (420) selon ladite première tension de référence ;
- un quatrième élément comparateur (52) qui est couplé audit troisième élément capacitif (49), reçoit en entrée la tension de charge aux bornes dudit troisième élément capacitif (49) et produit un deuxième signal logique si ladite tension de charge dépasse une tension de référence.

8. Dispositif électronique de protection contre un courant de fuite mis à la terre (30) selon l'une quelconque des revendications 3 à 7, **caractérisé en ce que** lesdits premiers moyens de circuit (36) comprennent un quatrième bloc de circuit (60) pour produire, après la réception des premier et deuxième signaux de validation, un signal de courant électrique à envoyer à l'entrée dudit premier réseau de circuit (24), afin de produire ledit signal de déclenchement électrique.

9. Dispositif électronique de protection contre un courant de fuite mis à la terre (30) selon l'une quelconque ou plusieurs des revendications 3 à 8, **caractérisé en ce que** lesdits premier et deuxième signaux logiques sont utilisés respectivement en tant que premier et deuxième signaux de validation pour ledit quatrième bloc de circuit (60).

10. Dispositif électronique de protection contre un courant de fuite mis à la terre (30) selon l'une quelconque des revendications précédentes, **caractérisé en ce que** lesdits premiers moyens électroniques (34) comprennent des quatrièmes moyens de circuit (60) pour s'interfacer auxdits premiers moyens formant détecteur (33), lesdits quatrièmes moyens de circuit (60) recevant desdits premiers moyens formant détecteur (33) ledit signal électrique (61) qui est indicatif de la valeur du courant de fuite mis à la terre, et produisant un signal de courant électrique (62) qui est indicatif de la valeur absolue dudit courant de fuite mis à la terre.

11. Dispositif électronique de protection contre un courant de fuite mis à la terre (30) selon l'une quelconque des revendications précédentes, **caractérisé en ce que** lesdits premiers moyens électroniques (34) comprennent des cinquièmes moyens de circuit (70) pour produire un signal de déclenchement électrique si dit lesdits premiers moyens formant détecteur fonctionnent mal (33).

12. Dispositif électronique de protection contre un courant de fuite mis à la terre (30) selon l'une quelconque des revendications précédentes, **caractérisé en ce que** lesdits moyens d'actionnement (35) sont connectés électriquement aux sixièmes moyens de circuit (75) qui conviennent pour recevoir un signal de déclenchement électrique (39) provenant desdits premiers moyens de circuit (36) et pour produire un ou plusieurs signaux électriques de commande (750) pour activer lesdits moyens d'actionnement (35).

13. Dispositif électronique de protection contre un courant de fuite mis à la terre (30) selon l'une quelconque ou plusieurs des revendications précédentes, **caractérisé en ce qu'**il comprend des troisièmes moyens électroniques (130), qui sont connectés électriquement à ladite ligne électrique à basse tension (32), afin de fournir une tension d'alimentation auxdits premiers et / ou deuxièmes moyens électroniques (34, 20).

14. Dispositif électronique de protection contre un courant de fuite mis à la terre (30) selon l'une quelconque ou plusieurs dès revendications précédentes, **caractérisé en ce que** lesdits premiers et / ou deuxièmes et / ou troisièmes moyens électroniques (34, 20, 130) sont intégrés dans un ou plusieurs circuits à semi-conducteurs microélectroniques.
